# EUROPEAN PATENT SPECIFICATION

(11) **EP 0 523 489 B1**
(45) Date of publication and mention of the grant of the patent: **24.01.1996**
(21) Application number: 92111378.3
(22) Date of filing: 04.07.1992
(51) Int. Cl.: F22B 27/16, A47J 27/16, F24C 15/32

(54) **Steam generation arrangement for food cooking equipment, in particular ovens and similar appliances**
Dampferzeugeranordnung für Lebensmittelkochapparate, insbesondere Öfen und dergleichen
Arrangement de générateur de vapeur pour appareils de cuisson d'aliments, en particulier fours et appareils similaires

(30) Priority: 17.07.1991 IT PN910047
(43) Date of publication of application: 20.01.1993
(73) Proprietor: ZANUSSI GRANDI IMPIANTI S.p.A., I-33170 Pordenone (IT)
(72) Inventor: Tassan Mangina, Franco, I-33080 Marsure di Aviano, Pordenone (IT)
(74) Representative: Giugni, Valter

(56) References cited:
- EP-A- 0 233 535
- EP-A- 0 244 538
- DE-A- 2 747 097
- FR-A- 2 599 280
- GB-A- 887 450

## Description

The present invention relates to a food cooking equipment as cooking ovens and similar appliances so as to quickly generate the steam required to cook the food in said appliances.

Food cooking equipment such as ovens and similar appliances are known from the prior art, which comprise an enclosed cavity provided with a fan and at least a gas-fuelled or electrically energized heating element, in which food is placed to cook under the action of a forced circulation of hot air or steam, or else a combination of hot air and steam, said forced circulation being induced by the rotation of said fan and being caused to flow through said heating element(s), whereas the steam is generated either in a separate boiler, which is connected with said enclosed cavity of the oven, or by letting water into said chambers on the suction side of said fan, which then directs such water against the outer surface of said heating element(s), where it therefore vaporizes instantly.

In particular, in the case of cooking ovens featuring steam generation through water being in such a way sprayed against the heating elements, it is possible that the vaporization efficiency of the water be further enhanced, and the cooking rate of the food be therefore accelerated, by making use of an appropriate atomizing device comprising a spray nozzle connected to the end of a water supply conduit and capable of atomizing said water jet and directing it towards the rotating fan, which in turn acts so as to improve the distribution of the water over the surfaces of said heating element(s) of the oven.

The presence of such atomizing spray nozzle, however, implies a practical drawback in that its perforation becomes progressively clogged by the build-up of limescale, ie. the calcareous particles contained in the water, so that any further flow of water through said spray nozzle for the afore mentioned purpose will eventually be blocked, whereas the system has an inherent need for either frequent servicing in view of cleaning, descaling or even replacing said atomizing spray nozzle, in order to restore regular operation, or else for water to be used which shall be previously softened through an either separate or built-in water softener associated with the cooking oven.

Cooking ovens of the afore cited kind are also known, which are equipped with a water supply conduit whose outlet end is not provided with any atomizing spray nozzle of the afore described type and is further turned toward the suction side of the oven fan so as to partially or totally lie over a hub that is coaxially fitted on the driving shaft of the fan wheel and projecting forwards therefrom.

In this type of ovens, steam is generated by letting water flow through said conduit and directing this non-pressurized flow against the blades of the fan wheel and also against the outer surface of said hub which, while rotating simultaneously with the fan wheel, causes it to distribute All over its outer surface. From this position, the water is then axially thrown by centrifugation towards the blades of the fan wheel, which are arranged concentrically around said hub, in the form of relatively large droplets that are directed by the action of said fan wheel towards the heating elements, which are arranged concentrically around the same fan wheel, where said droplets are caused to evaporate by the heat generated by said heating elements.

A steam generator arrangement of this kind is actually able to generate steam on a continuous basis, even in the presence of a particularly hard water with a strong scaling action, since the water supply conduit is not provided with any atomizing spray nozzle which would be subject to clogging by scaling. It, however, has a drawback in the low efficiency it shows in evaporating the water that is directed against said hub, owing to the considerable difficulty found in atomizing the water droplets forming on the outer surface of the same hub and thrown centrifugally against said heating elements.

Further well-known types of cooking ovens, equipped with a similar kind of Steam generation facility as the afore described one, substantially include a cylindrical hub that is fitted coaxially on to the driving shaft of the fan wheel and is provided with an inner hollow cavity having a cup-like shape, the free outlet end of the water supply conduit being arranged to partially penetrate into said hollow cavity. In this case, the water flowing under non-pressurized conditions from said supply conduit into said inner hollow cavity of the hub when the latter is rotating along with the fan wheel, is radially thrown by centrifugation along the front outer edge of said hub and reaches then the outer peripheral surface of the same hub in the shape of a discoidal veil of water that is directed radially against the blades of the fan wheel, which are arranged concentrically around the hub, from where the water, having been in such a way atomized, is sprayed onto the heating elements so as to cause it to evaporate.

However, cooking ovens of the afore described type have a drawback in that such a hub is arranged in correspondence of the air intake side of the fan wheel, so that contaminants (fat, etc.) end up in the hollow cavity of said hub and build up there as food cooking cycles are being performed in the oven. As a consequence, such a hollow cavity will eventually become clogged by said contaminants, whereas such a dirt collected therein turns out to be quite difficult to remove owing to the particular shape of said inner hollow cavity, so that water will be hindered from properly entering said hollow cavity and the correct operation of this steam generation arrangement will therefore be impaired.

A similar solution is disclosed in EP-A-0 244 538. General kinds of liquid atomizer are also disclosed in GB-A-887 450 and FR-A-2 599 280, but they are particularly adapted to be used in connection with oil burners and gas fluxes to be heated or refrigerated.

It is the purpose of the present invention to eliminate all the afore cited drawbacks in food cooking appliances of the afore specified kind by employing a steam generation arrangement for food cooking purposes, which is provided with the features and characteristics as substantially described with particular reference to the appended claims.

The invention will be further described by way of non-limiting example with reference to the accompanying drawings, in which:
- Figure 1 is the schematical side view of the cross-section of a food cooking oven embodying a steam generation arrangement according to the present invention;
- Figure 2 is a front elevational view of the food cooking oven according to Figure 1, as sectioned along the line A-A;
- Figure 3 is a view showing a structural detail of the steam generation arrangement according to the present invention;
- Figure 4 is a front elevational view of the structural detail shown in Figure 3;
- Figure 5 is a different structural embodiment of the steam generation arrangement according to the present invention.

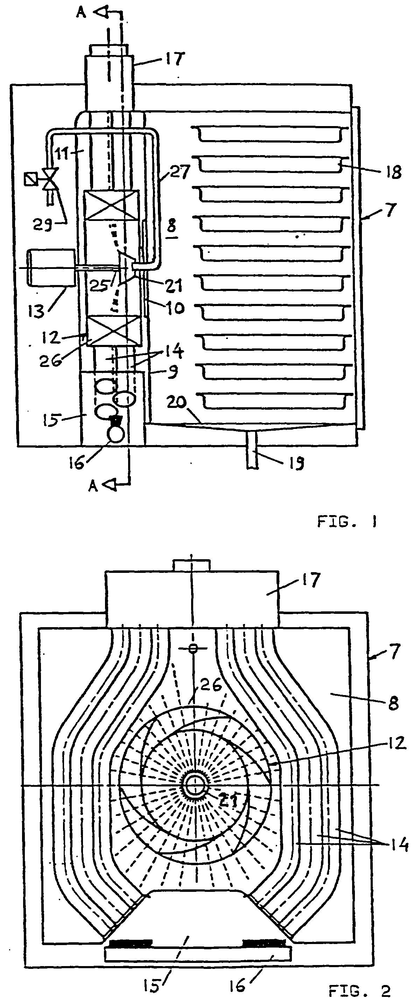

If reference is now made to Figures 1 and 2, it can be noticed that these are schematical views showing a food cooking appliance such as a cooking oven, comprising a box-like outer housing 7 delimiting an enclosed cooking cavity 8 in which the food to be cooked is placed, said cooking cavity being separated, by means of a partition wall 9 provided with a circular central hole 10, from a further cavity 11 in which a fan means 12 is housed in a central position, said fan means being rotatably driven by an electric motor 13.

Said fan means 12 is enclosed by a heat-exchanger arrangement formed by a plurality of pipes 14 extending vertically through said cavity 11 and appropriately bent so as to communicate on their lower side with a combustion chamber 15 accomodating a gas burner 16 connected with an appropriate gas supply conduit (not shown), and on their upper side with a flue riser 17 provided to exhaust flue gases flowing upwards through said pipes 14.

Furthermore, said cooking cavity 8 is designed to accomodate a plurality of removable-type shelves 18 in a multi-tiered arrangement, on which the food to be cooked can be placed, and is further provided with an outlet conduit 19 passing through the bottom plate 20 situated on the lower portion of said cooking cavity of the oven, said conduit being arranged to enable said cooking cavity to communicate with the outside, so as to be able to let both the cleaning solutions used to clean the cooking cavity and the water resulting from the condensation of steam during cooking operations to flow outside for convenient collection and removal.

Cooking of the food placed on the afore cited extractable shelves 18 in the cooking cavity 8 of the oven is brought about by a forced circulation of either hot air or steam, or a mixture of hot air and steam, said forced circulation being generated by the action of the fan means 12, whereas the air is heated when entering into contact with the outer surface of the heat-exchanger arrangement 14 and the steam is generated by the action of the steam generation arrangement described below.

Said heat-exchanger arrangement can be also formed by at least an electric heating element (not shown) arranged all around said fan means 12, thereby replacing the afore described gas-fuelled heating system, without departing from the scopes of the present invention.

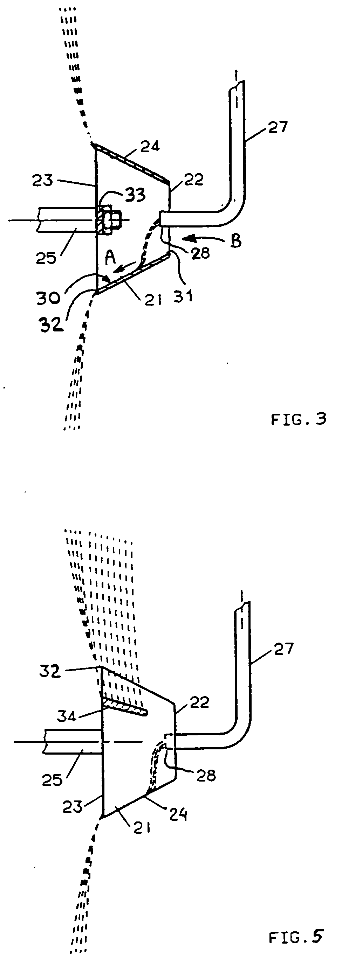

Referring now to Figure 3, it can be noticed that the steam generation arrangement according to the present invention is essentially formed by a ring-like element 21 having a frusto-conical shape, of which the smaller-diameter plane surface 22 is connected with the larger-diameter plane surface 23 through the outer tapered surface 24, said ring-like element being shrink-fitted on to the front end of the shaft 25, which is provided to rotatably drive the bladed wheel 26 of the fan means 12, and being further provided with an outer diameter that is decreasing as it progresses along towards the end portion of said shaft, and it is also formed by at least a conduit 27 whose outlet end opening 28 is situated inside the ring-like rotating element 21 in an axial position with respect to the shaft 25, while passing through the smaller-diameter plane surface 22, said conduit being connected through an electromagnetic valve 29 or similar control means with the water supply.

Figure 3 also illustrates the way in which steam is generated by the steam generation arrangement according to the present invention. It can be noticed that, to this purpose, the fan means 12, and therefore also the ring-like element 21, is rotatably driven whenever a selected cooking cycle is being performed by the oven, whereas said electromagnetic valve 29 is in turn energized to open.

As a consequence, water flows then through the conduit 27 and out of the outlet end opening 28 thereof, so as to fall onto the inner surface 30 of the underlying ring-like rotating element 21, close to the smaller-diameter circumferential rim 31 of said ring-like rotating element, from where it is then gradually conveyed in form of a thin veil of water along said inner surface 30, in the direction shown by the arrow A, towards the larger-diameter circumferential rim 32, which is defined between said inner surface and said larger-diameter plane surface 23 of the ring-like rotating element, owing to the centrifugal effect brought about by the rotation of said ring-like rotating element 21, as well as to the conveyance effect induced by the air in the direction shown by the arrow B under the action of the rotating wheel 26 of the fan means 12, said suction effect causing therefore the water to swirl off along said tapered inner surface.

Furthermore, this veil of water becomes thinner and thinner as it gets closer to said larger-diameter circumferential rim 32 and, as soon as it reaches the edge delimitating said circumferential rim, it comes off therefrom in the form of a thin jet that is directed radially and is formed by a large number of very small water droplets, thereby bringing about a definite water atomizing effect.

Said water droplets are further deviated by the suction effect induced by the fan means 12 and are therefore directed, under very even distribution, towards the outer surface of the heat-exchanger arrangement 14, where they vaporize instantly, said fan means 12 further causing the so generated steam to be circulated inside said cooking cavity 8 of the oven, where it will therefore progressively cook the food placed therein.

The quantity of circulating water being otherwise equal, said water atomization effect increases with an increasing extension of said circumferential rim 32 and, as a consequence, of the diameter of said frusto-conical ring-like rotating element 21.

The steam generation arrangement provided in the above described way actually enables the water vaporization efficiency of the water to be greatly enhanced and, therefore, the cooking of the food to be quickened accordingly, owing to the fact that it atomizes the water in a quite simple and swift way, according to the afore described principles, into a high number of very fine particles that are then instantly and completely vaporized upon entering in contact with the surface of the heat-exchanger arrangement 14.

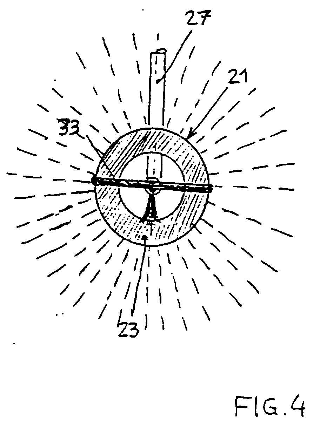

By referring now to Figure 4, it can be noticed that it shows a possible way in which the driving shaft 25 of the wheel 26 of said fan means 12 is to be fixed to the ring-like rotating element 21. To this purpose, said driving shaft 25 is attached centrally to a brace 33 which is welded to two diametrically opposed points on the larger-diameter plane surface 23 of the ring-like element 21. However, said driving shaft can of course be fixed to the ring-like rotating element 21 in any such different way as it appears to be expedient, without departing from the scopes of the present invention.

It can be noticed in Figure 5 that, in this particular embodiment of the steam generation arrangement according to the present invention, said ring-like rotating element 21, while maintaining a frusto-conical contour, has an outer tapered surface 24 which on the contrary is provided with one or more through-slits that may be different and variable in both their shape and size and are distributed at a regular pitch over a determined length along said outer surface, these through-slits being in this way provided so as to cause part of said surface veil of water to come off the rotating element even before it reaches the edge delimitating the circumferential rim 32, thereby causing the water to be projected radially so as to improve the distribution of the atomized water in view of enhancing its vaporization for generating the steam required to cook the food.

## Claims

1. A food cooking equipment, such as a cooking oven, comprising a steam generation arrangement for application in such food cooking equipment, further comprising an enclosed cooking cavity (8) provided with a fan means (12) and at least a gas-fuelled or electrically energized heating element (14), in which food is placed to cook under the action of a forced circulation of hot air or steam, or else a combination of hot air and steam, said forced circulation being induced by the rotation of said fan and being caused to flow through said heating element, and comprising further at least a conduit (27) for supplying water through control means (29), the outlet opening (28) of said--conduit (27) being arranged axially with respect to and inside at least a ring-like rotating element (21) having a frusto-conical shape and being connected with the same shaft (25) that is provided to rotatably drive the wheel (26) of said fan means (12), so that the water outflowing from said supply conduit (27) is directed against the inner surface (30) of said ring-like rotating element (21) and conveyed in the form of a veil of water along said inner surface (30), characterized in that said ring-like rotating element (21) is open at both rim ends (31,32) and said driving shaft (25) is fixed centrally to a brace (33) or similar member attached to two diametrically opposed points on the larger diameter rim end (32).

2. A food cooking equipment according to claim 1, characterized in that said ring-like rotating element (21) is provided with an outer surface (24) provided with one or more through-slits (34) being different and variable in both their shape and size and distributed over a determined length along said outer surface.

## Patentansprüche

1. Nahrungsmittelkochapparat, wie beispielsweise ein Kochofen, der eine Dampferzeugungsanordnung zur Anwendung in einem solchen Nahrungsmittelkochapparat aufweist, der weiterhin einen umschlossenen Kochhohlraum (8) aufweist, der mit einer Lüftereinrichtung (12) und mindestens einem gasbefeuerten oder elektrisch betriebenen Heizelement (14) versehen ist, in dem Nahrungsmittel plaziert werden, um sie unter der Wirkung einer Zwangszirkulation heißer Luft oder Dampfes zu kochen, oder auch durch eine Kombination aus heißer Luft und Dampf, wobei die Zwangszirkulation durch die Drehung des Lüfters induziert wird und dazu gebracht wird, durch das Heizelement zu strömen, und weiterhin mindestens einen Kanal (27) zur Zuführung von Wasser mittels einer Steuereinrichtung (29) aufweist, wobei die Auslaßöffnung (28) des Kanals (27) axial hinsichtlich zu und innerhalb mindestens eines ringähnlichen, sich drehenden Elements (21) angeordnet ist, das eine kegelstumpfförmige Form besitzt und mit derselben Welle (25) verbunden ist, die für einen drehbaren Antrieb des Rads (26) der Lüftereinrichtung (12) vorgesehen ist, so daß das Wasser, das von dem Zuführkanal (27) aus strömt, gegen die innere Oberfläche (30) des ringähnlichen, sich drehenden Teils (21) gerichtet und in der Form eines Schleiers aus Wassers entlang der inneren Oberfläche (30) befördert wird, dadurch gekennzeichnet, daß das ringähnliche, sich drehende Element (21) an beiden Randenden (31,32) offen ist und die Antriebswelle (25) zentral an einer Klammer (33) oder einem ähnlichen Teil befestigt ist, das an zwei diametral gegenüberliegenden Punkten auf dem Randende (32) mit größeren Durchmesser befestigt ist.

2. Nahrungsmittelkochapparat gemäß Anspruch 1, dadurch gekennzeichnet, daß das ringähnliche, sich drehende Element (21) mit einer äußeren Oberfläche (24) versehen ist, die mit einem oder mehreren Durchgangsschlitz(en) (34) versehen ist, der (die) sowohl in deren Form als auch Größe unterschiedlich und variabel ist (sind) und über eine vorbestimmte Länge entlang der äußeren Oberfläche verteilt ist (sind).

## Revendications

1. Appareil de cuisson d'aliments, tel qu'un four de cuisson, comprenant un dispositif générateur de vapeur pour usage dans un tel appareil de cuisson d'aliments, comprenant en outre une cavité de cuisson (8) fermée comportant un moyen de ventilateur (12) et au moins un élément de chauffage (14) à énergie électrique ou à gaz, dans laquelle sont placés les aliments devant être cuits sous l'action d'une circulation forcée d'air chaud ou de vapeur, ou bien une combinaison d'air chaud et de vapeur, ladite circulation forcée étant produite par la rotation dudit ventilateur et entraînée à s'écouler à travers ledit élément de chauffage, et comprenant en outre au moins un conduit (27) d'alimentation en eau par l'intermédiaire de moyens de commande (29), l'ouverture de sortie (28) dudit conduit (27) étant disposée axialement par rapport à et à l'intérieur d'au moins un élément rotatif de type annulaire (21) ayant une forme de cône tronqué et étant connecté au même arbre (25) qui est prévu pour entraîner la roue (26) dudit moyen de ventilateur (12), de sorte que l'eau s'écoulant dudit conduit d'alimentation (27) soit dirigée contre la surface intérieure (30) du dit élément rotatif de type annulaire (21) et acheminée sous la forme d'un voile d'eau le long de ladite surface intérieure (30), caractérisé en ce que ledit élément rotatif de type annulaire (21) est ouvert aux deux extrémités de pourtour (31, 32) et que ledit arbre d'entraînement (25) est fixé au centre d'une entretoise (33) ou d'un élément similaire en deux points opposés sur l'extrémité de pourtour au diamètre le plus grand (32).

2. Appareil de cuisson d'aliments selon la revendication 1, caractérisé en ce que ledit élément rotatif de type annulaire (21) comporte une surface extérieure (24) comportant une ou plusieurs fentes traversantes (34) étant différentes et variable à la fois dans leur forme et dans leur dimension et réparties sur une longueur déterminée le long de ladite surface extérieure.
